# FASCICULE DE BREVET EUROPEEN

(11) **EP 2 150 694 B1**
(45) Date de publication et mention de la délivrance du brevet: **22.06.2011**
(21) Numéro de dépôt: 08805846.6
(22) Date de dépôt: 23.05.2008
(51) Int. Cl.: F02K 9/42, F02K 9/44, B64G 1/40

(54) **Dispositif cryotechnique de propulsion dans l'espace et son procédé de commande**
Kryotechnische Vorrichtung für Weltraumantrieb und deren Steuerungsverfahren
Cryotechnic space propulsion device and its control method

(30) Priorité: 24.05.2007 FR 0703680
(43) Date de publication de la demande: 10.02.2010
(73) Titulaire: Centre National d'Etudes Spatiales, 75001 Paris (FR)
(72) Inventeur: FORTUNIER, Pascal, F-91490 Milly La Foret (FR); LEUDIERE, Vincent, F-75010 Paris (FR)
(74) Mandataire: Colas, Jean-Pierre
(86) Numéro de dépôt international: PCT/FR2008/050902
(87) Numéro de publication internationale: WO 2008/152285

(56) Documents cités:
- FR-A- 2 822 193
- RU-C1- 2 109 975
- US-A- 3 597 923
- US-A- 5 279 484
- US-B1- 6 769 242

## Description

La présente invention est relative à un dispositif cryotechnique de propulsion dans l'espace, adapté à un fonctionnement intermittent, comprenant des premier et deuxième réservoirs principaux de premier et deuxième ergols cryogéniques liquides, combustible et comburant respectivement, des premier et deuxième moyens de vaporisation desdits premier et deuxième ergols liquides respectivement, et au moins une chambre de combustion propulsive alimentée par lesdits ergols vaporisés. L'invention est aussi relative à un procédé de commande de ce dispositif.

On a conçu un tel dispositif de propulsion notamment pour équiper l'étage supérieur d'un lanceur de satellite géostationnaire. Dans cette application l'étage supérieur est conçu pour assurer le transfert du satellite d'une orbite basse (LEO), de quelques centaines de km d'altitude, à l'orbite géostationnaire (GEO) finale du satellite, de 36 000 km d'altitude environ. Ce transfert peut s'opérer par des tirs successifs du dispositif de propulsion, déclenchés au passage de l'étage aux périgées et aux apogées des orbites elliptiques successives par lesquelles il atteint progressivement son orbite géostationnaire, selon la technique dite du transfert de Hohmann. Une telle stratégie permet de mettre sur orbite géostationnaire un satellite de plusieurs tonnes en utilisant avantageusement, dans l'étage supérieur du lanceur, un dispositif de propulsion développant une poussée relativement faible, de 500 à 1000 N par exemple.

Un dispositif, ou module, de propulsion de ce type est décrit dans la demande de brevet n° 2 822 193 déposée le 16 mars 2001 au nom de Snecma moteurs société anonyme. Ce dispositif a pour but d'assurer le transfert d'orbite d'un satellite avec un dispositif plus simple, moins lourd et moins encombrant que les dispositifs de l'art antérieur, en évitant l'utilisation de turbopompes, coûteuses, pour l'alimentation en ergols de la chambre de combustion et en permettant l'utilisation de propulseurs et de réservoirs d'ergols de taille raisonnable.

Les divers modes de réalisation décrits de ce module comprennent au moins un propulseur, des réservoirs d'ergols pressurisés par intermittence, des moyens de mise en pression de chacun de ces réservoirs comprenant au moins un circuit échangeur de chaleur associé à un accumulateur thermique et une micro-pompe électrique de mise en circulation d'une quantité déterminée d'un ergol liquide dans ce circuit. Ils comprennent en outre des moyens pour réchauffer l'accumulateur thermique entre deux tirs consécutifs du module. Le propulseur est alimenté en ergols liquides ou gazeux (voir le mode de réalisation de la figure 10). L'accumulateur thermique est chauffé au moins en partie à l'aide d'un capteur solaire.

On évite ainsi, notamment, l'utilisation de turbo-pompes. Cependant, la présence de micro-pompes électriques, de capteurs solaires et de moyens de mise en pression des réservoirs sont des sources de coûts substantiels alors qu'il existe aujourd'hui le besoin de réduire autant que possible le coût des moyens nécessaires à la mise sur orbite des satellites géostationnaires. US3597923 divulgue un dispositif cryotechnique selon le préambule de la revendication 1.

La présente invention a donc pour but de réduire encore le coût d'un dispositif de propulsion du type décrit en préambule de la présente description.

On atteint ce but de la présente invention avec un dispositif cryotechnique de propulsion dans l'espace du type énoncé en préambule de la présente description, remarquable en ce que les premier et deuxième moyens de vaporisation des premier et deuxième ergols liquides sont en relation de transfert thermique avec la chambre de combustion, en ce que les premier et deuxième ergols vaporisés, formés dans ces premier et deuxième moyens de vaporisation respectivement, passent dans des premier et deuxième moyens de compression respectivement, et en ce que les gaz comprimés dans les premier et deuxième moyens de compression sont stockés dans des premier et deuxième réservoirs tampon respectivement, disposés entre les moyens de compression et la chambre de combustion.

Comme on le verra en détail dans la suite, la structure de ce dispositif est particulièrement simple, fiable et réalisable à coût réduit, notamment grâce à l'absence des pompes électriques ou des turbo-pompes classiquement nécessaires pour faire circuler les ergols hors des réservoirs, et grâce à l'utilisation de réservoirs d'ergols liquides non pressurisés et d'une chambre de combustion non refroidie.

Selon d'autres caractéristiques de la présente invention :
- les moyens de vaporisation sont constitués chacun par un serpentin alimenté en ergol venu du réservoir principal associé et enroulé autour de la chambre propulsive,
- chacun des moyens de compression est un compresseur volumétrique,
- le dispositif comprend des moyens d'alimentation auxiliaires des premier et deuxième moyens de compression avec des fractions des premier et deuxième ergols vaporisés sous chauffage solaire dans les premier et deuxième réservoirs principaux,

- les premier et deuxième ergols sont constitués par de l'oxygène et de l'hydrogène liquides, respectivement,
- les compresseurs volumétriques sont animés par de l'énergie électrique délivrée par une pile à combustible,
- la pile à combustible est alimentée directement en oxygène et en hydrogène liquides par les premier et deuxième réservoirs principaux,
- en variante, la pile à combustible est alimentée en oxygène et en hydrogène gazeux par les premier et deuxième réservoirs tampon respectivement,
- le dispositif comprend des moyens auxiliaires d'échange thermique permettant à la chaleur dégagée par le fonctionnement de la pile à combustible de contribuer à la vaporisation des ergols,
- le dispositif comprend un système de contrôle d'attitude alimenté en ergol gazeux par un des réservoirs tampon.
- la chambre de combustion propulsive forme un tout monolithique avec un divergent associé,
- la chambre propulsive est réalisée en un alliage réfractaire et protégée par un revêtement anti-oxydation.

L'invention est aussi relative à un procédé de commande de ce dispositif, remarquable en ce que, à la première phase propulsive du dispositif, on fait fonctionner d'abord les réservoirs tampon en détente pendant une durée prédéterminée, on ouvre ensuite des vannes d'isolement des réservoirs principaux et on active les moyens de compression pour assurer le remplissage des réservoirs tampon et l'alimentation en ergols gazeux de la chambre propulsive pendant le reste de la phase propulsive.

Suivant d'autres caractéristiques de ce procédé :
- en phase balistique du dispositif, on sépare les phases liquide et gazeuse des ergols dans les réservoirs principaux pour récupérer la phase gazeuse et charger les réservoirs tampon,
- on sépare les phases liquide et gazeuse par application d'une poussée longitudinale au dispositif.
- en variante, on sépare ces phases par mise en rotation du dispositif autour de son axe longitudinal.

L'invention est encore relative à un étage supérieur de lanceur de satellites terrestres conçu pour assurer le transfert d'un satellite d'une orbite basse à une orbite géostationnaire selon une procédure du type dit "transfert de Hohmann", cet étage étant équipé d'un dispositif de propulsion selon la présente invention.

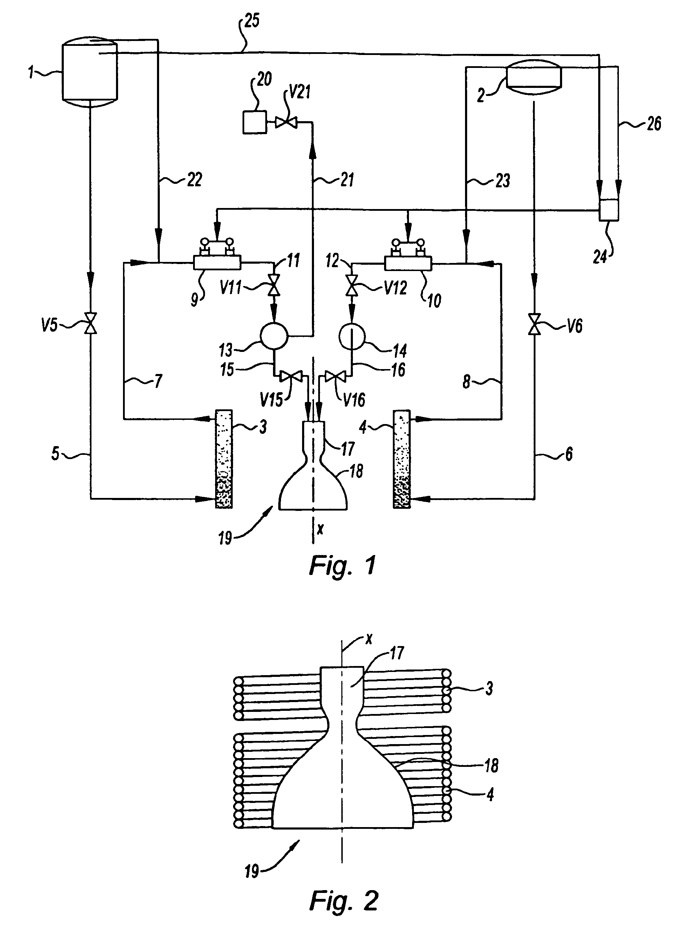

D'autres caractéristiques et avantages de la présente invention apparaîtront à la lecture de la description qui va suivre et à l'examen de dessin annexé dans lequel :
- la figure est un schéma synoptique d'un mode de réalisation préféré du dispositif de propulsion suivant l'invention, et
- la figure représente schématiquement, en coupe axiale, un mode de réalisation des moyens de vaporisation utilisables dans le dispositif de la figure 1.

On se réfère à la figure 1 du dessin annexé où il apparaît que le dispositif suivant l'invention comprend essentiellement des premier et deuxième réservoirs principaux d'ergols cryotechniques liquides 1 et 2 respectivement, combustible et comburant respectivement, alimentant des premier et deuxième moyens de vaporisation 3 et 4 respectivement de ces ergols par l'intermédiaire de lignes d'alimentation 5 et 6 respectivement. A titre d'exemple illustratif et non limitatif seulement, les réservoirs 1 et 2 peuvent contenir respectivement de l'hydrogène (LH2) et de l'oxygène (LOX) liquides.

Les ergols vaporisés dans les moyens de vaporisation 3 et 4, qui seront décrits en plus de détail dans la suite, sont conduits par des lignes 7 et 8 respectivement dans des moyens de compression 9 et 10 respectivement, avantageusement constitués par des compresseurs volumétriques, à piston par exemple, de fabrication peu coûteuse et de bon rendement.

Les gaz comprimés dans les compresseurs 9 et 10 sont conduits par des lignes 11 et 12 respectivement, dans des réservoirs tampon 13 et 14 respectivement. Des lignes 15 et 16 raccordent ces réservoirs tampon 13 et 14 respectivement aux entrées d'alimentation d'une chambre de combustion 17 associée à une tuyère, ou divergent, 18 pour constituer la chambre propulsive 19 du dispositif suivant l'invention.

Suivant une caractéristique importante de la présente invention, la chaleur rayonnée par la chambre propulsive 19 en conséquence de la combustion des ergols gazeux dans la chambre 17 est utilisée pour vaporiser les ergols liquides qui sont délivrés aux moyens de vaporisation 3 et 4 par les réservoirs 1 et 2 respectivement. Pour ce faire, comme schématisé à la figure 1, ces moyens de vaporisation 3 et 4 sont disposés au voisinage de la chambre propulsive 19 de manière à être en relation de transfert thermique avec celle-ci.

Il est clair qu'une telle vaporisation ne peut intervenir que pendant les phases propulsives du fonctionnement du dispositif suivant l'invention. Or celui-ci doit disposer d'une réserve d'ergols gazeux sous pression au démarrage de chaque phase propulsive. C'est le rôle des réservoirs tampon 13 et 14 que de fournir cette réserve de gaz nécessaire au démarrage d'une telle phase.

Comme on l'a vu plus haut, cette réserve est constituée principalement par les gaz formés dans les moyens de vaporisation 3 et 4 mais aussi, comme on le verra plus loin, par des gaz formés sous chauffage solaire dans les réservoirs principaux 1 et 2 eux-mêmes et qui se forment dans ces réservoirs aussi bien pendant les phases non propulsives que pendant les phases propulsives du dispositif suivant l'invention.

Les réservoirs tampon 13 et 14 ont aussi pour rôle, pendant les phases propulsives, de lisser les fluctuations de pression dues au fonctionnement alternatif des compresseurs volumétriques à piston.

Celui-ci comprend en outre, classiquement, un système de contrôle d'attitude 20 assurant le pilotage du dispositif de propulsion notamment quand celui-ci est inactif. Ce système peut prendre diverses formes connues. Conformément à l'objectif de bas coût qui est celui de la présente invention, ce système fonctionne avantageusement en détente pure à partir d'hydrogène gazeux délivré par une ligne 21 alimentée elle-même par le réservoir tampon 13. Cependant d'autres systèmes plus classiques, fonctionnant par combustion d'ergols pourraient être envisagés.

Avantageusement, selon l'invention, on récupère les ergols gazeux qui se forment dans les réservoirs 1 et 2 sous chauffage solaire, ou du fait du ballottement des ergols liquides dans ces réservoirs lors des manoeuvres du dispositif dans l'espace. Ces ergols gazeux sont conduits des réservoirs 1 et 2 aux entrées des compresseurs 9 et 10 par des lignes 22 et 23 respectivement.

Des électrovannes V5, V6, V11, V12, V15, V16 et V21 sont implantées sur les lignes de mêmes références numériques respectives pour isoler ou commuter sélectivement les différents composants du dispositif lors des différents modes de fonctionnement de celui-ci, qui seront décrits dans la suite de la présente description.

Le dispositif comprend encore une pile à combustible 24 délivrant l'énergie électrique nécessaire au fonctionnement de ses divers composants. L'alimentation en oxygène et en hydrogène de la pile 24 est avantageusement assurée par les réservoirs 1 et 2, à travers des lignes 25 et 26 respectivement.

Il découle de la description qui précède que le dispositif suivant l'invention est structuré de manière à vaporiser au plus tôt les ergols de manière à les faire circuler ensuite sous forme gazeuse plutôt que sous forme liquide. On supprime ainsi avantageusement des pompes coûteuses de circulation d'ergols liquides, au prix de l'introduction de compresseurs volumétriques plus simples et moins coûteux.

On notera en outre l'absence, également avantageuse, de système de pressurisation des réservoirs 1 et 2. L'utilisation classique de réservoirs pressurisés conduit à d'importantes pertes d'ergols dues à l'échauffement de ces ergols sous chauffage solaire d'une part et aux ballottements de ces ergols lors les manoeuvres nombreuses (plusieurs dizaines) qui interviennent pendant un transfert d'Hohmann, d'autre part. Suivant la présente invention, au contraire, on récupère par les lignes 22 et 23 les ergols vaporisés dans les réservoirs 1 et 2 pour les comprimer et les stocker dans les réservoirs tampon, même pendant les phases de non fonctionnement de la chambre propulsive 19. Cette récupération fait intervenir un système de gestion de la thermique réservoir (dit TVS) connu en lui-même. Pendant les phases propulsives la pression dans les réservoirs diminue ce qui facilite l'évaporation des ergols dans ces réservoirs.

On va maintenant décrire en plus de détail les divers composants du dispositif de propulsion suivant l'invention. A titre d'exemple illustratif et non limitatif seulement, on décrira un dispositif de propulsion conçu pour délivrer par intermittence une poussée F = 1000 N par une combustion LH2/LOX, avec un rapport de mélange RM = 5 et une pression de combustion Pc = 10 bar.

L'isolation thermique des réservoirs 1 et 2 pourra être relativement simple puisque les flux thermiques agissant sur ceux-ci conduisent à une vaporisation d'ergols utilisés par le dispositif. C'est là encore une source d'économie. La pression P1 dans le réservoir 1 de LH2 reste très basse pour être proche du point d'ébullition (T = 20 K, P1 = 1,2 bar). La pression P2 dans le réservoir de LOX est avantageusement plus forte pour soulager le compresseur 10 (T = 90 K, P2 = 7 bar).

Les moyens d'évaporation 3 et 4, nécessaires pour passer des phases liquides contenues dans les réservoirs 1 et 2 aux phases gazeuses délivrées aux compresseurs 9 et 10, peuvent être constitués de tubulures, en cuivre par exemple, formées en serpentins autour de la chambre propulsive 19. A titre d'exemple illustratif et non limitatif seulement, on a représenté schématiquement à la figure 2 un mode de réalisation de ces serpentins 3 et 4.Dans ce mode de réalisation, ces serpentins sont disposés côte à côte et centrés sur l'axe X de la chambre propulsive 19.

D'autres configurations sont évidemment possibles. Il faut cependant tenir compte du fait que la vaporisation de l'oxygène demande plus de puissance thermique que celle de l'hydrogène, dans le rapport de 2 à 1 environ. On disposera donc avantageusement les spires du serpentin 4 dans lesquelles circule l'oxygène au niveau des parties les plus chaudes, en fonctionnement, de la chambre propulsive, notamment en face de la base du divergent 18. On peut aussi disposer les deux serpentins de manière que leurs spires soient imbriquées, avec un motif répétitif de deux spires pour l'oxygène contre une spire pour l'hydrogène. On peut encore accoler les deux serpentins concentriquement l'un à l'autre, le serpentin associé à l'oxygène étant intérieur à l'autre.

Les spires des serpentins seront avantageusement les plus jointives possibles et positionnées au plus près des parois chaudes de la chambre propulsive de manière à limiter au mieux les pertes thermiques. Les spires pourront être assemblées par brasure de manière à empêcher tout mouvement relatif entre elles et, en outre, à homogénéiser la température des serpentins. Ceux-ci pourront recevoir un revêtement interne absorbant la chaleur. Les serpentins pourront encore être entourés extérieurement d'une protection thermique (mousse, feutre, etc..) de manière à limiter les pertes thermiques dues au flux rayonné par leurs spires.

La chambre de combustion 17 comprend classiquement une plaque au niveau de laquelle s'opèrent les injections d'hydrogène et d'oxygène gazeux. On disposera avantageusement un écran thermique à ce niveau de manière à limiter le flux thermique rayonné en dehors de l'espace occupé par les serpentins et à limiter ainsi que le propre échauffement de la plaque d'injection. Elle est dimensionnée pour délivrer la poussée nominale de 1000 N indiquée ci-dessus et pour rayonner la puissance thermique requise pour vaporiser les ergols liquides passant dans les serpentins 3 et 4 adjacents, puissance qui est de l'ordre de 70 à 75 kW environ.

Les compresseurs 9 et 10 sont alimentés en énergie électrique par la pile à combustible 24. Ils peuvent être d'une puissance relativement faible, de 30 kW par exemple pour un débit de 5000 l/mn. Comme on l'a vu plus haut ils sont peu coûteux par rapport aux turbo-pompes et présentent un bon rendement. Ils contribuent donc significativement à atteindre le but poursuivi par la présente invention.

En ce qui concerne les fonctions des réservoirs tampon 13 et 14 exposées plus haut, on a vu en particulier que le réservoir tampon d'hydrogène 13 peut aussi avoir pour rôle d'alimenter le système de contrôle d'attitude 20, qui fonctionne alors avantageusement en détente pure. En variante, celui-ci pourrait aussi brûler des gaz dans une petite chambre de combustion. C'est là cependant une solution de gestion plus complexe et donc moins bien adaptée que la détente pure à la production d'un dispositif à bas coût, qui est un des buts poursuivis par la présente invention.

Des couples d'ergols autres que le couple LH2/LOX pourraient être utilisés dans un dispositif de propulsion suivant l'invention. C'est ainsi que l'on pourrait remplacer l'hydrogène liquide par du méthane ou de l'éthanol liquides, par exemple.

Conformément à l'objectif de bas coût que s'est fixée la présente invention, il convient que ces ergols soient brûlés dans une chambre propulsive de structure simple. Celle-ci pourra donc avantageusement être dépourvue du système classique, complexe, de refroidissement par canaux convectifs. Pour ce faire on propose, suivant l'invention, que cette chambre soit monolithique, réalisée en alliage réfractaire et protégée par un revêtement anti-oxydation. A titre d'exemple illustratif et non limitatif, l'alliage pourra être constitué de Niobium et de Colombium. Une protection de la chambre par un film de combustible est aussi envisageable, de même qu'une protection par un matériau d'ablation.

Les débits d'oxygène et d'hydrogène nécessaires au fonctionnement de la pile à combustible sont relativement faibles et peuvent être prélevés dans les réservoirs principaux 1 et 2, comme représenté à la figure 1, ou dans les réservoirs tampon. La pile pourra être refroidie par un faible débit d'hydrogène liquide. A titre d'exemple illustratif seulement, le rendement de la pile sera de 0,5 environ et sa puissance spécifique de l'ordre de 650 W/kg.

Le dispositif suivant l'invention comprend évidement des moyens de commande (non représentés) de ses divers composants, tels qu'un ordinateur de bord assurant notamment les ouvertures et fermetures séquentielles des vannes et les allumages de la chambre propulsive lors des diverses phases de son vol, que l'on va décrire dans la suite de la présente description.

Comme on l'a indiqué plus haut, le dispositif suivant l'invention est plus particulièrement destiné à être intégré à l'étage supérieur d'un lanceur de satellite géostationnaire. Sa mission spécifique est de faire passer ce satellite d'une orbite basse à une orbite géostationnaire, ou géosynchrone, par la technique du transfert de Hohmann. A titre d'exemple illustratif et non limitatif seulement, cette technique peut exiger environ 50 tirs de 10 mn aux périgées de diverses orbites elliptiques intermédiaires, entrecoupées de phases orbitales d'une dizaines d'heures, et quelques tirs d'une durée de 1 heure aux apogées avec des phases orbitales d'une dizaine d'heures également.

Avant le premier des tirs, ou phases propulsives, mentionnés ci-dessus, il convient naturellement de vérifier les pressions des gaz contenus dans les réservoirs tampon 13 et 14. Ces pressions peuvent avoir été établies au sol par un remplissage convenable de ces réservoirs. En variante, pendant le vol des étages inférieurs du lanceur, les compresseurs 9 et 10 peuvent avoir été activés pour remplir ces réservoirs avec les gaz produits sous échauffement solaire par les réservoirs principaux 1 et 2 et conduits aux compresseurs 9 et 10 par les lignes 22 et 23 respectivement.

Dans les deux cas, si les pressions contrôlées sont de niveau insuffisants, on pourra les remonter au niveau convenable au moyen de petits évaporateurs d'ergols liquides (non représentés) fonctionnant sous chauffage électrique fourni par la pile à combustible 24 et/ ou sous chauffage par des moyens de refroidissement (non représentés) de cette pile. Pendant cette mise à niveau des pressions, les vannes V15 et V16 qui permettent d'isoler la chambre de combustion 17 restent évidemment fermées.

Au début de la première phase propulsive, l'alimentation en ergols gazeux de la chambre de combustion 17 est assurée transitoirement par les seuls réservoirs tampon 13 et 14, isolés des compresseurs 9 et 10 par les vannes adéquates. Pendant ce régime transitoire, d'une durée typique de quelques secondes, les réservoirs tampon fonctionnent donc seulement en détente, ou en "blow down" suivant l'expression anglo-saxonne consacrée.

Dès le régime établi atteint, les vannes V5 et V6 d'isolement des réservoirs 1 et 2 s'ouvrent et les compresseurs 9 et 10 sont activés. Avantageusement, des moyens d'asservissement du fonctionnement de ces compresseurs aux pressions correspondantes régnant dans les réservoirs tampon peuvent être prévus.

L'extinction de la chambre de combustion 17 est commandée simplement par la fermeture des vannes 15 et 16 d'injection des gaz dans la chambre de combustion 17. En aval de ces vannes, les gaz restants sont naturellement "tirés au vide".

Si, alors, les réservoirs 1 et 2 ne chargent pas les lignes 22 et 23 en ergols gazeux, les moyens de commande déclenchent la fermeture des vannes V5 et V6 d'isolement des réservoirs et, peu après, l'arrêt du fonctionnement des compresseurs 9 et 10 de manière à garantir des niveaux de pression dans les réservoirs tampon 13 et 14 qui soient suffisants pour assurer le démarrage de la phase propulsive suivante.

Dans le cas contraire, avant l'extinction de la chambre 17, les moyens de commande ferment les vannes V5 et V6 et arrêtent les compresseurs 9 et 10. La chambre 17 fonctionne alors en détente pour vidanger les réservoirs tampon 13 et 14 et faire ainsi de la place dans ceux-ci pour les ergols gazeux résultant du dégazage des réservoirs principaux 1 et 2, de manière que ces ergols ne soient pas perdus.

Dans les phases balistiques intermédiaires entre deux phases propulsives consécutives, le système de contrôle d'attitude agit éventuellement sur la trajectoire du dispositif suivant l'invention, en prélevant du gaz dans le réservoir tampon 13 par exemple, comme c'est le cas dans le mode de réalisation représenté à la figure 1.

En dessous d'un seuil de pression prédéterminé, ou pour préparer le dispositif à l'allumage suivant de la chambre propulsive, on activera les petits évaporateurs d'ergols à chauffage électrique évoqués ci-dessus.

Pendant ces phases balistiques, les ergols gazeux éventuellement produits par les réservoirs principaux 1 et 2 sont comprimés par les compresseurs 9 et 10 et chargés dans les réservoirs tampon 13 et 14 respectivement. Cela suppose évidemment que les phases gazeuses et liquides soient bien séparées dans les réservoirs 1 et 2, de manière que le prélèvement de la phase gazeuse puisse se faire dans une région bien déterminée de chaque réservoir, par exemple en partie haute comme représenté à la figure 1. Cela est possible notamment lors des premières phases balistiques, alors que le volume de gaz contenu dans chaque réservoir est faible devant celui du liquide. On peut alors concentrer le liquide en fond de réservoir en activant des tuyères du système de contrôle d'attitude qui exercent des forces longitudinales sur l'étage équipé du dispositif de propulsion suivant l'invention.

Quand le volume de gaz est plus élevé (supérieur par exemple à 30% du volume total), et que réservoirs sont coaxiaux à l'étage, on pourra plaquer le liquide contre les parois latérales des réservoirs en mettant cet étage en rotation, ou "spin", autour de son axe et en prélevant les gaz dans la partie centrale de ces réservoirs, alors vidée de liquide.

Il apparaît maintenant que le dispositif suivant l'invention permet bien d'atteindre les buts annoncés, à savoir fournir un dispositif cryotechnique de propulsion simple susceptible d'être réalisé à coût très contenu, grâce à l'absence de système de pressurisation des réservoirs principaux, à l'absence de pompes coûteuses et à l'utilisation d'une chambre propulsive non refroidie.

Le dispositif est néanmoins performant car il utilise avantageusement le couple d'ergols hydrogène/ oxygène à haute impulsion spécifique. Il est fiable du fait qu'il comprend un minimum d'équipements, de puissance modérée.

Bien entendu l'invention n'est pas limitée au mode de réalisation décrit et représenté, qui n'a été donné qu'à titre d'exemple. C'est ainsi que le dispositif décrit comme intégré à l'étage supérieur d'un lanceur de satellite sur une orbite stationnaire pourrait également être physiquement solidaire d'un tel satellite pendant le transfert de celui-ci sur une telle orbite.

## Revendications

1. Dispositif cryotechnique de propulsion dans l'espace, adapté à un fonctionnement intermittent, comprenant des premier (1) et deuxième (2) réservoirs principaux de premier et deuxième ergols cryogéniques liquides respectivement, combustible et comburant respectivement, des premier (3) et deuxième (4) moyens de vaporisation desdits premier et deuxième ergols liquides respectivement, et au moins une chambre de combustion propulsive (19) alimentée par lesdits ergols vaporisés, lesdits premier (3) et deuxième (4) moyens de vaporisation étant en relation de transfert thermique avec ladite chambre de combustion (19), **caractérisé en ce que** lesdits premier et deuxième ergols vaporisés, formés dans lesdits premier (3) et deuxième (4) moyens de vaporisation respectivement, passent dans des premier (9) et deuxième (10) moyens de compression respectivement, et **en ce que** les gaz comprimés dans lesdits premier (9) et deuxième (10) moyens de compression sont stockés dans des premier (13) et deuxième (14) réservoirs tampon respectivement, disposés entre lesdits moyens de compression (9, 10) et ladite chambre de combustion (19).

2. Dispositif conforme à la revendication 1, **caractérisé en ce que** lesdits moyens de vaporisation (3, 4) sont constitués chacun par un serpentin alimenté en ergol venu du réservoir principal (1, 2) associé et enroulé autour de ladite chambre propulsive (19).

3. Dispositif conforme à la revendication 1 ou 2, **caractérisé en ce que** chacun desdits moyens de compression (9, 10) est un compresseur volumétrique.

4. Dispositif conforme à l'une quelconque des revendications précédentes, **caractérisé en ce qu'**il comprend des moyens d'alimentation auxiliaires desdits premier et deuxième moyens de compression (9, 10) avec des fractions desdits premier et deuxième ergols vaporisés sous chauffage solaire dans lesdits premier et deuxième réservoirs principaux (9, 10).

5. Dispositif conforme à l'une quelconque des revendications précédentes, **caractérisé en ce que** lesdits premier et deuxième ergols sont constitués par de l'oxygène et de l'hydrogène liquides, respectivement.

6. Dispositif conforme à la revendication 5, dans sa combinaison avec l'une quelconque des revendications 3 et 4, **caractérisé en ce que** lesdits moyens de compression sont animés par de l'énergie électrique délivrée par une pile à combustible (24).

7. Dispositif conforme à la revendication 6, **caractérisé en ce que** ladite pile à combustible (24) est alimentée directement en oxygène et en hydrogène liquides par lesdits premier et deuxième réservoirs principaux (1, 2).

8. Dispositif conforme à la revendication 6, **caractérisé en ce que** ladite pile à combustible est alimentée en oxygène et en hydrogène gazeux par lesdits premier (13) et deuxième (14) réservoirs tampon respectivement.

9. Dispositif conforme à l'une quelconque des revendications 6 à 8, **caractérisé en ce qu'**il comprend des moyens auxiliaires d'échange thermique permettant à la chaleur dégagée par le fonctionnement de ladite pile à combustible (24) de contribuer à la vaporisation desdits ergols.

10. Dispositif conforme à l'une quelconque des revendications précédentes, **caractérisé en ce qu'**il comprend un système de contrôle d'attitude (20) alimenté en ergol gazeux par un desdits réservoirs tampon (13, 14).

11. Dispositif conforme à l'une quelconque des revendications précédentes, **caractérisé en ce que** ladite chambre de combustion propulsive (19) forme un tout monolithique avec un divergent associé.

12. Dispositif conforme à la revendication 11, **caractérisé en ce que** ladite chambre propulsive (19) est réalisée en un alliage réfractaire et protégée par un revêtement anti-oxydation.

13. Procédé de commande du fonctionnement du dispositif conforme à l'une quelconque des revendications 1 à 12, **caractérisé en ce que**, à la première phase propulsive dudit dispositif, on fait fonctionner d'abord lesdits réservoirs tampon (13, 14) en détente pendant une durée prédéterminée, on ouvre ensuite des vannes d'isolement (V5, V6) desdits réservoirs principaux (1, 2) et on active lesdits moyens de compression (9, 10) pour assurer le remplissage desdits réservoirs tampon et l'alimentation en ergols gazeux de ladite chambre propulsive (19) pendant le reste de ladite phase propulsive.

14. Procédé conforme à la revendication 13, **caractérisé en ce qu'**en phase balistique dudit dispositif, on sépare les phases liquide et gazeuse desdits ergols dans lesdits réservoirs principaux (1, 2) pour récupérer ladite phase gazeuse et charger lesdits réservoirs tampon (13, 14).

15. Procédé conforme à la revendication 14, **caractérisé en ce qu'**on sépare lesdites phases liquide et gazeuse par application d'une poussée longitudinale audit dispositif.

16. Procédé conforme à la revendication 14, **caractérisé en ce qu'**on sépare lesdites phases liquide et gazeuse par mise en rotation dudit dispositif autour de son axe longitudinal.

17. Etage supérieur de lanceur de satellites terrestres, conçu pour assurer le transfert d'un satellite d'une orbite basse (LEO) à une orbite géostationnaire (GEO) selon une procédure du type dit « transfert de Hohmann », **caractérisé en ce que** ledit étage comporte au moins un dispositif cryotechnique de propulsion conforme à l'une quelconque des revendications 1 à 12.

## Claims

1. A cryotechnic space propulsion device, adapted for intermittent operation, comprising first (1) and second (2) main reservoirs for respective first and second liquid cryogenic propellants, being fuel and oxidiser respectively, first (3) and second (4) means for vaporising the said respective first and second liquid propellants, and at least one propellant combustion chamber (19) supplied by the said vaporised propellants, the said first (3) and second (4) vaporisation means being in heat transfer relationship with the said combustion chamber (19), **characterised in that** the said first and second vaporised propellants, formed in the first (3) and second (4) vaporisation means respectively, pass into first (9) and second (10) compression means respectively, and **in that** the gases compressed in the said first (9) and second (10) compression means are stored in first (13) and second (14) buffer reservoirs respectively, arranged between the said compression means (9, 10) and the said combustion chamber (19).

2. Device according to claim 1, **characterised in that** the said vaporisation means (3, 4) are each formed by a coil supplied with propellant coming from the associated main reservoir (1, 2) and wrapped round the said propellant chamber (19).

3. Device according to claim 1 or claim 2, **characterised in that** each of the said compression means (9, 10) is a volumetric compressor.

4. Device according to any one of the preceding claims, **characterised in that** it includes auxiliary means for supplying the said first and second compression means (9, 10) with fractions of the said first and second propellants vaporised by solar heating in the said first and second main reservoirs (9, 10).

5. Device according to any one of the preceding claims, **characterised in that** the said first and second propellants are oxygen and liquid hydrogen respectively.

6. Device according to claim 5, in combination with one of claims 3 and 4, **characterised in that** the said compression means are actuated by electrical energy delivered by a fuel cell (24).

7. Device according to claim 6, **characterised in that** the said fuel cell (24) is supplied directly with oxygen and with liquid hydrogen from the said first and second main reservoirs (1, 2).

8. Device according to claim 6, **characterised in that** the said fuel cell is supplied with oxygen and with hydrogen gas from the said first (13) and second (14) buffer reservoirs respectively.

9. Device according to any one of claims 6 to 8, **characterised in that** it includes auxiliary heat exchange means allowing the heat released by the operation of the said fuel cell (24) to contribute to the vaporisation of the said propellants.

10. Device according to any one of the preceding claims, **characterised in that** it includes an attitude control system (20) supplied with gas propellant from one of the buffer reservoirs (13, 14).

11. Device according to any one of the preceding claims, **characterised in that** the said propellant combustion chamber (19) forms a monolithic whole with an associated flared section.

12. Device according to claim 11, **characterised in that** the said propellant chamber (19) is made of a refractory alloy and protected by an anti-oxidation coating.

13. Method of controlling the operation of a device according to any one of claims 1 to 12, **characterised in that**, in a first propulsion phase of the said device, the said buffer reservoirs (13, 14) are first operated in expansion for a predetermined time, then isolation valves (V5, V6) of the main reservoirs (1, 2) are opened and the said compression means (9, 10) actuated to ensure the filling of the said buffer reservoirs and the supply of gas propellant to the said propellant chamber (19) during the remainder of the said propulsion phase.

14. Method according to claim 13, **characterised in that** in a ballistic phase of the said device, the liquid and gas phases of the said propellants are separated in the said main reservoirs (1, 2) to recover the said gas phase and fill the said buffer reservoirs (13, 14).

15. Method according to claim 14, **characterised in that** the said liquid and gas phases are separated by a longitudinal thrust of the said device.

16. Method according to claim 14, **characterised in that** the said liquid and gas phases are separated by rotating the said device about its longitudinal axis.

17. Upper stage of a terrestrial satellite launcher, designed to ensure the transfer of a satellite from a low altitude orbit (LEO) to a geostationary orbit (GEO) according to a procedure of the type called 'Hohmann transfer', **characterised in that** the said stage comprises at least one cryotechnic propulsion device according to any one of claims 1 to 12.

## Patentansprüche

1. Kryotechnische Vorrichtung zum Antrieb im Weltraum, geeignet für einen intermittierenden Betrieb, umfassend einen ersten (1) und einen zweiten (2) Hauptbehälter jeweils für einen ersten und zweiten kryogenen Flüssigtreibstoff, die jeweils ein Brennstoff und ein Sauerstoffträger sind, jeweils erste (3) und zweite (4) Verdampfungsmittel für diesen ersten und zweiten kryogenen Flüssigtreibstoff, und mindestens eine Antriebsbrennkammer (19), die mit diesen verdampften Treibstoffen versorgt wird, wobei die ersten (3) und zweiten (4) Verdampfungsmittel in Wärmeübertragungsbeziehung mit dieser Brennkammer (19) sind, **dadurch gekennzeichnet, dass** die ersten und zweiten verdampften Treibstoffe, die jeweils im ersten (3) und zweiten (4) Verdampfungsmittel geformt werden, jeweils in erste (9) und zweite (10) Verdichtungsmittel eintreten und **dadurch gekennzeichnet, dass** die Gase, die in diesen ersten (9) und zweiten (10) Verdichtungsmitteln verdichtet werden, jeweils in ersten (13) und zweiten (14) Pufferbehältern gespeichert werden, die zwischen den Verdichtungsmitteln (9, 10) und der Brennkammer (19) angeordnet sind.

2. Vorrichtung nach Anspruch 1, **dadurch gekennzeichnet, dass** die Verdampfungsmittel (3, 4) jeweils aus einer Rohrschlange bestehen, die mit Treibstoff aus dem zugehörigen Hauptbehälter versorgt wird und um die Antriebsbrennkammer (19) herum gewickelt ist.

3. Vorrichtung nach Anspruch 1 oder 2, **dadurch gekennzeichnet, dass** jedes der Verdichtungsmittel (9, 10) ein Verdrängungsverdichter ist.

4. Vorrichtung nach einem der vorherigen Ansprüche, **dadurch gekennzeichnet, dass** sie Hilfsversorgungsmittel umfasst, um die ersten und zweiten Verdichtungsmittel (9, 10) mit Anteilen der ersten und zweiten Treibstoffe zu versorgen, die durch solare Erwärmung in den ersten und zweiten Hauptbehältern (9, 10) verdampfen.

5. Vorrichtung nach einem der vorherigen Ansprüche, **dadurch gekennzeichnet, dass** die ersten und zweiten Treibstoffe jeweils aus Flüssigsauerstoff und -wasserstoff bestehen.

6. Vorrichtung nach Anspruch 5, in Kombination mit einem der Ansprüche 3 und 4, **dadurch gekennzeichnet, dass** die Verdichtungsmittel durch die elektrische Energie betrieben werden, die von einer Brennstoffzelle (24) abgegeben werden.

7. Vorrichtung nach Anspruch 6, **dadurch gekennzeichnet, dass** die Brennstoffzelle (24) direkt von den ersten und zweiten Hauptbehältern (1, 2) mit flüssigem Sauerstoff und Wasserstoff versorgt werden.

8. Vorrichtung nach Anspruch 6, **dadurch gekennzeichnet, dass** die Brennstoffzelle (24) von den ersten (13) und zweiten (14) Pufferbehältern jeweils mit gasförmigem Sauerstoff und Wasserstoff versorgt wird.

9. Vorrichtung nach einem der Ansprüche 6 bis 8, **dadurch gekennzeichnet, dass** sie Wärmeaustausch-Hilfsmittel umfasst, die der durch den Betrieb der Brennstoffzelle (24) abgegebenen Wärme erlauben, zur Verdampfung der Treibstoffe beizutragen.

10. Vorrichtung nach einem der vorherigen Ansprüche, **dadurch gekennzeichnet, dass** sie ein Lageregelungssystem (20) umfasst, das von einem der Pufferbehälter (13, 14) mit gasförmigem Treibstoff versorgt wird.

11. Vorrichtung nach einem der vorherigen Ansprüche, **dadurch gekennzeichnet, dass** die Antriebsbrennkammer (19) ein monolithisches Ganzes mit einem zugehörigen divergenten Düsenteil formt.

12. Vorrichtung nach Anspruch 11, **dadurch gekennzeichnet, dass** die Antriebsbrennkammer (19) aus einer hochwarmfesten Legierung mit einer Oxidationsschutzschicht besteht.

13. Verfahren zur Betriebssteuerung der Vorrichtung nach einem der Ansprüche 1 bis 12, **dadurch gekennzeichnet, dass** in der ersten Antriebsphase dieser Vorrichtung zuerst die Pufferbehälter (13, 14) eine vorbestimmte Zeit lang durch Entspannung betrieben werden, dann die Absperrventile (V5, V6) der Hauptbehälter (1, 2) geöffnet werden und die Verdichtungsmittel (9, 10) aktiviert werden, um während des Rests dieser Antriebsphase die Füllung der Pufferbehälter und die Versorgung der Antriebsbrennkammer (19) mit gasförmigen Treibstoffen zu gewährleisten.

14. Verfahren nach Anspruch 13, **dadurch gekennzeichnet, dass** in der ballistischen Phase dieser Vorrichtung die Flüssig- und Gasphasen der Treibstoffe in den Hauptbehältern (1, 2) getrennt werden, um die Gasphase zurückzugewinnen und die Pufferbehälter (13, 14) zu laden.

15. Verfahren nach Anspruch 14, **dadurch gekennzeichnet, dass** die Flüssig- und Gasphasen getrennt werden, indem ein Längsschub an die Vorrichtung angelegt wird.

16. Verfahren nach Anspruch 14, **dadurch gekennzeichnet, dass** die Flüssig- und Gasphasen getrennt werden, indem die Vorrichtung um ihre Längsachse in Drehung versetzt wird.

17. Obere Stufe einer Trägerrakete für Satelliten, konzipiert, um einer "hohmannscher Übergang" genannten Prozedur entsprechend den Übergang eines Satelliten aus einer erdnahen Umlaufbahn (LEO) in eine geostationäre Umlaufbahn (GEO) zu gewährleisten, **dadurch gekennzeichnet, dass** diese Stufe mindestens eine kryotechnische Antriebsvorrichtung nach einem der Ansprüche 1 bis 12 umfasst.
